# EUROPEAN PATENT APPLICATION

(11) **EP 4 601 368 A1**
(43) Date of publication of application: **13.08.2025**
(21) Application number: 24870081.7
(22) Date of filing: 31.07.2024
(51) Int. Cl.: H04W 60/02

(54) **COMMUNICATION METHOD, ELECTRONIC DEVICE, AND READABLE MEDIUM**

(30) Priority: 26.09.2023 CN 202311274574
(71) Applicant: Honor Device Co., Ltd., Shenzhen, Guangdong 518040 (CN)
(72) Inventor: CHEN, Xiong, Shenzhen, Guangdong 518040 (CN)
(74) Representative: Isarpatent
(86) International application number: PCT/CN2024/108884
(87) International publication number: WO 2025/066528

(57) **Abstract**

This application relates to the field of mobile communication technologies, and in particular, to a communication method, an electronic device, and a readable medium. The communication method is applied to user equipment, and includes: After a registration request is sent to a first core network corresponding to a first network standard such as a 5G network standard, if a first authentication reject message sent by the first core network is received, the first network standard is disabled when the received first authentication reject message includes preset error type information and a condition for a number of times receiving the first authentication reject message satisfies a preset number; and a registration request is sent to the second core network based on a lower second network standard such as a 4G network standard. Based on the foregoing solution, the device can be prevented from continuously retrying registration, thereby ensuring that a user normally uses a data function of the device.

## Description

This application claims priority to Chinese Patent Application No. 202311274574.3, filed with the China National Intellectual Property Administration on September 26, 2023, and entitled "COMMUNICATION METHOD, ELECTRONIC DEVICE, AND READABLE MEDIUM", which is incorporated herein by reference in its entirety.

### TECHNICAL FIELD

This application relates to the field of mobile communication technologies, and in particular, to a communication method, an electronic device, and a readable medium.

### BACKGROUND

With the development of wireless communication technologies, wireless communication networks gradually evolve to 5th Generation Mobile Communication Technology (5th Generation Mobile Communication Technology, 5G). When a user uses user equipment (user equipment, UE) to use a 5G service, a base station identifies permission for the terminal device to use the 5G service, to determine whether the user can use the terminal device to use the corresponding 5G service.

In the related art, when the user uses the UE to use the 5G service, the UE sends a registration request to a core network (network, NW), and the NW starts an authentication procedure with the UE after receiving the registration request of the UE. In some cases, when detecting some error codes indicating an authentication failure, the UE may consider that the authentication is unsuccessful due to an abnormal network state. Therefore, the UE repeatedly performs registration attempts. In this process, services such as data and voice of the UE are always in a disabled state, and the user cannot normally use the UE.

### SUMMARY

An objective of this application is to provide a communication method, an electronic device, and a readable medium.

According to a first aspect, an embodiment of this application provides a communication method, applied to user equipment, and including: sending a registration request to a first core network of a first network standard, where the registration request is used for instructing the first core network to authenticate the user equipment; receiving a first authentication reject message sent by the first core network, and determining that the received first authentication reject message satisfies a first network switching condition, where the first network switching condition includes that a number of times the first authentication reject message including a first type of error type information is received is greater than a number threshold; and disabling the first network standard, and sending a registration request to a second core network based on a second network standard, where the first network standard is higher than the second network standard, and the first network standard is a 5G network standard.

That is, in this embodiment of this application, the first core network is a 5G core network. The UE may send the registration request to the 5G core network, to trigger an authentication procedure of the 5G core network for the UE. When the received first authentication reject message satisfies the first network switching condition, the 5G network standard may be disabled, so that the UE registers based on a lower standard.

Through a communication method of this application, when authentication corresponding to the first network standard in the user equipment has an exception, and the exception cannot be fixed temporarily, registration with a wireless network based on another standard still succeeds, so that the user can normally use functions such as data and voice, thereby ensuring normal use of the device.

In a possible implementation of the first aspect, the disabling the first network standard, and sending a registration request to a second core network based on a second network standard includes: determining a disabling duration for disabling the first network standard; disabling the first network standard, and sending the registration request to the second core network based on the second network standard; and enabling the first network standard in response to that the disabling of the first network standard has reached the disabling duration, and sending a registration request to the first core network based on the first network standard.

That is, in this embodiment of this application, the first network standard may be an SA NR standard corresponding to 5G, and the second network standard may be a 4G LTE standard corresponding to 4G. Because the UE performs network search and registration procedures based on a policy of giving priority to a high standard, and the first network standard is higher than the second network standard, the UE may automatically send the registration request based on the second network standard after the first network standard is disabled.

In a possible implementation of the first aspect, the determining a disabling duration for disabling the first network standard includes: determining a number of times disabling of the first network standard has been performed, where each time of disabling corresponds to a preset duration; and determining a preset duration corresponding to the number of times disabling of the first network standard has been performed as the disabling duration.

That is, in this embodiment of this application, a disabling duration is determined according to a time of disabling. According to some embodiments, a disabling duration may increase as a time of disabling increases. According to some other embodiments, a disabling duration may alternatively be a cyclic array, and cycles as a time of disabling increases. For example, a disabling duration is 12 minutes when the SA NR standard is disabled for the first time; a disabling duration is 2 hours when the SA NR standard is disabled for the second time; a disabling duration is 8 hours when the SA NR standard is disabled for the third time; a disabling duration is 24 hours when the SA NR standard is disabled for the fourth time; a disabling duration is 12 minutes when the SA NR standard is disabled for the fifth time; and so on.

In a possible implementation of the first aspect, the method further includes: enabling the first network standard in response to a network recovery operation performed by a user based on the user equipment, and sending a registration request to the first core network based on the first network standard.

That is, in this embodiment of this application, the network recovery operation performed by the user on the USIM or software in the user equipment may trigger the enabling of the first network standard.

In a possible implementation of the first aspect, a manner of determining that the first authentication reject message includes the first type of error type information includes: determining, when the first authentication reject message includes a preset error identifier (or referred to as error code), that the first authentication reject message includes the first type of error type information.

That is, in this embodiment of this application, the first authentication reject message carries error codes, and the UE may detect the error codes and determine error types corresponding to the error codes.

In a possible implementation of the first aspect, the preset error identifier includes at least one of #20, #21, #26, and #70; an error cause corresponding to #20 is MAC code failure; an error cause corresponding to #21 is Non-5G authentication unacceptable; an error cause corresponding to #26 is 5G authentication parameter already in use; an error cause corresponding to #70 is synchronization failure of the user equipment and the first core network.

That is, in this embodiment of this application, the error identifier may include a plurality of error codes specified in a protocol, and an error cause corresponding to each error code may be a network exception or a USIM exception.

In a possible implementation of the first aspect, the network recovery operation includes at least one of turning on or off an airplane mode, unplugging or replacing a subscriber identity module card, or turning on or off a 5G switch.

That is, in this embodiment of this application, the user may recover the SA switch, that is, release the disabling of the SA NR standard, by turning on or off the airplane mode, unplugging or replacing the subscriber identity module card, or turning on or off the 5G switch. The subscriber identity module card is USIM.

In a possible implementation of the first aspect, after the disabling the first network standard, and sending a registration request to a second core network based on a second network standard, the method further includes: receiving a second authentication reject message sent by the second core network, and determining that the received second authentication reject message satisfies a second network switching condition, where the second network switching condition includes that error type information included in the received second authentication reject message is different from the error type information included in the received first authentication reject message; and enabling the first network standard, and sending a registration request to the first core network based on the first network standard.

That is, in this embodiment of this application, if a reject cause value (that is, error code) changes, the SA switch may be recovered, and the registration request is sent based on 5G again.

In a possible implementation of the first aspect, the second network standard is a 4G network standard.

That is, in this embodiment of this application, the second core network may be a 4G core network.

According to a second aspect, an embodiment of this application provides an electronic device, including: a memory, configured to store instructions executed by one or more processors of the electronic device, and the processor, configured to execute the instructions of the communication method according to the first aspect.

According to a third aspect, an embodiment of this application provides a readable medium. The readable medium has instructions stored thereon, and when the instructions are executed on an electronic device, the electronic device is enabled to perform the communication method according to the first aspect.

According to a fourth aspect, an embodiment of this application provides a computer program product, including: a non-volatile computer-readable storage medium. The non-volatile computer-readable storage medium includes computer program code configured to perform the communication method according to the first aspect.

### BRIEF DESCRIPTION OF DRAWINGS

To describe the technical solutions and advantages in the embodiments of this application or the conventional technology more clearly, the following briefly describes the accompanying drawings required for describing the embodiments or the conventional technology. Apparently, the accompanying drawings in the following descriptions show merely some embodiments of this application, and a person of ordinary skill in the art may obtain other accompanying drawings according to these accompanying drawings without creative efforts.
FIG. 1 is a schematic diagram of a 5G network architecture according to this application;
FIG. 2 is a schematic diagram of a UE registration scenario according to this application;
FIG. 3 is a schematic flowchart of a first communication method according to an embodiment of this application;
FIG. 4 is a schematic flowchart of a second communication method according to an embodiment of this application;
FIG. 5 is a schematic flowchart of a third communication method according to an embodiment of this application;
FIG. 6 is a schematic diagram of a communication architecture of an electronic device 100 according to an embodiment of this application;
FIG. 7 is a schematic diagram of a hardware framework of an electronic device 100 according to an embodiment of this application; and
FIG. 8 is a block diagram of a software structure of an electronic device 100 according to an embodiment of this application.

### DESCRIPTION OF EMBODIMENTS

The following clearly and thoroughly describes technical solutions in embodiments of this application with reference to the accompanying drawings.

In the field of mobile communication, after a UE is powered on, procedures such as initialization, network search, and registration are sequentially performed. After receiving a registration request initiated by the UE, an NW starts to perform an authentication procedure for the UE. It may be understood that the UE may include a universal subscriber identity module card (Universal Subscriber Identity Module, USIM), and the USIM is configured to store information, such as identity information and a key.

It may be understood that authentication refers to identity authentication or authentication of network permission of the UE. The foregoing authentication procedure for the UE is to perform identity authentication on the UE trying to access the network, and verify whether the UE has permission to access or operate related data based on the mobile communication network. If authentication fails during the registration, the UE receives an authentication reject message. It may be understood that there are a plurality of errors that cause the 5G authentication failure. For example, a temporary network failure or a USIM data loading exception may cause a MAC code failure, and consequently necessary information is missing during authentication, resulting in an authentication failure. In another example, a 5G authentication parameter is missing due of wear of the USIM, resulting in an authentication failure.

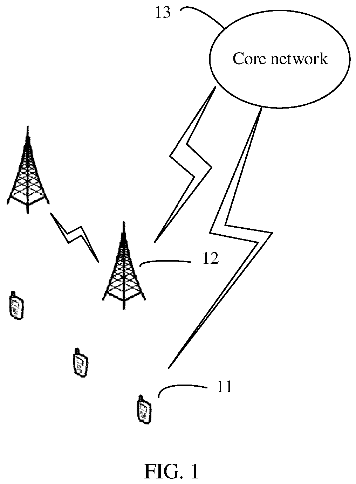

Referring to FIG. 1, a 5G network architecture may include a device 11, a base station 12, and a core network 13. In some optional embodiments, the device 11 may send a registration request to the core network 13 through the base station 12, and after receiving the registration request, the core network 13 may start an authentication procedure with the device 11. It may be understood that, if the core network 13 identifies that the device 11 has network access permission, the core network 13 feeds back an authentication reply message to the device 11; otherwise, the core network 13 sends an authentication reject message to the device 11. That is, the device 11 is notified that the authentication fails and the registration fails.

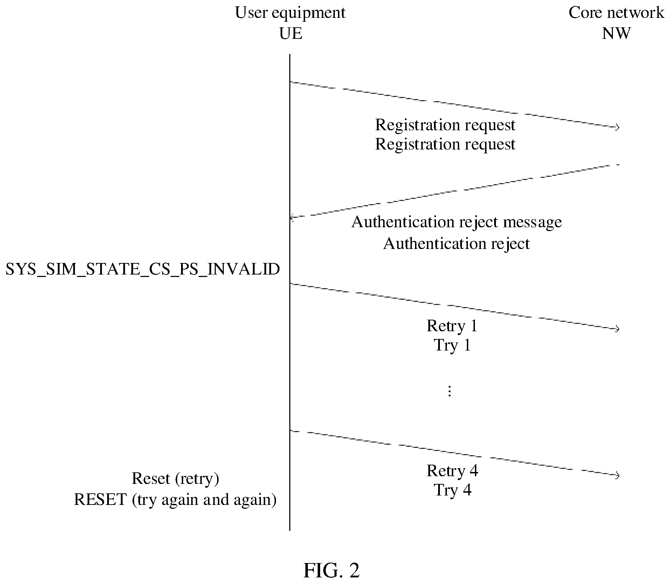

According to some embodiments, referring to FIG. 2, when a UE turns on a 5G switch, the UE accesses an NW in a stand alone (Stand Alone, SA) NR mode, and a corresponding authentication manner is 5G authentication. After the UE performs network search and sends a 5G registration request to the NW, the NW performs a 5G authentication procedure for the UE. If the NW fails to authenticate the UE, the NW returns an authentication reject message to the UE. The authentication reject message carries an error code.

The UE receives the authentication reject message and detects some error codes, for example, error codes #20 and #21, where an error type corresponding to #20 may be MAC code failure (MAC code failure), an error type corresponding to #21 may be non-5G authentication unacceptable (non-5G authentification unacceptable), and it is considered that the authentication error is caused by a network factor. Therefore, the UE disables a circuit switched domain (Circuit Switch, CS) and a packet switched domain (Packet Switch, PS) and starts a card saving procedure once. For example, referring to FIG. 2, a regular subscriber identity module card (regular subscriber identity module, REG SIM) of the UE starts a recovery timer (recover timer) to reset the card, that is, resends the registration request to the NW after the time of the recovery timer ends, so that the UE retries registration on the NR. After the re-registration fails for four times, a single card saving procedure ends.

However, the foregoing error code is not necessarily caused by a network factor, and may further include other causes that cannot be fixed, for example, the SIM card is an old card (a standard card, not a MicroSIM card), or a pin of the SIM card is damaged. If the error has not been fixed, after the single card saving procedure ends, the UE needs to perform network search and registration again. During the network search, the UE still performs network search in a mode of giving priority to a high standard, that is, performs network search preferentially in an SA mode. In other words, the 5G authentication procedure is still triggered when the UE registers again. If the 5G authentication fails again, the card saving procedure needs to be started again, causing the UE to fall in an infinite card saving cycle.

It should be noted that, in the foregoing card saving procedure, services such as voice and data of the UE are all disabled. According to the communication protocol, after the UE receives the authentication reject message, the state of the USIM is set to SYS_SIM_STATE_CS_PS_INVALID, that is, the CS domain and the PS domain are disabled. Because the CS domain carries voice services and fax services in the network, and the PS domain carries data services in the network, disabling the CS domain and the PS domain is equivalent to disabling voice, fax, and data services of the UE.

In the foregoing embodiment, if the UE fails to be authenticated in the 5G-based registration process and detects a specific error code, the UE considers that the error cause is a network exception, and repeatedly requests the registration with the NW until authentication is successful. In this process, functions such as data and voice of the UE are disabled. As a result, the user cannot use the mobile phone normally, and user experience is degraded. Specifically, if the authentication succeeds, the UE receives an authentication reply message, or otherwise receives an authentication reject message. Before the UE receives the authentication reply message sent by the RW, the UE is always in the card saving cycle, that is, the two steps of receiving the authentication reject message and re-trying to register are cyclically performed. In some cases, it is possible that the cause of the 5G authentication failure always cannot be fixed. For example, if the USIM is an old card with a 4G account and a part of key data for 5G authentication is missing, the UE using the card always cannot be successfully authenticated before the card is replaced with a new card. As a result, the user always cannot normally use a data function of the UE.

To resolve the foregoing problem, an embodiment of this application provides a communication method. When the UE requests registration with the NW based on 5G and receives an authentication reject message, and the authentication reject message carries a preset error code and a number of times registration is requested satisfies a preset number, the SA NR standard corresponding to the 5G network is disabled for a preset duration, so that a next time of network search of the UE can be performed based on another low standard different from the SA NR standard. For example, the another low standard may be a 4th Generation Mobile Communication Technology (4th Generation Mobile Communication Technology, 4G) Long Term Evolution (Long Term Evolution, LTE) standard. In this way, even if the UE cannot be successfully authenticated because the authentication error is not fixed, the UE can still successfully register based on another wireless network such as a 4G network within the disabling duration of the SA NR standard by disabling the SA NR standard, so that the user can normally use functions such as data and voice of the UE. It may be understood that after the disabling duration of each time of disabling ends, the UE may initiate registration again based on 5G.

In some optional embodiments, when an authentication failure number reaches a preset number, the SA NR standard may be disabled, where the disabling duration is determined according to the time of disabling. For example, a disabling duration is 12 minutes when the SA NR standard is disabled for the first time; a disabling duration is 2 hours when the SA NR standard is disabled for the second time; a disabling duration is 8 hours when the SA NR standard is disabled for the third time; a disabling duration is 24 hours when the SA NR standard is disabled for the fourth time. It may be understood that after the disabling duration of each time of disabling ends, the UE may initiate registration again based on 5G, and enters a next time of disabling if the number of times retrying fails satisfies a preset number condition. The disabling duration is increased as the number of times of disabling increases, which can avoid a case that a function of the UE is frequently disabled because the UE frequently retries registration, to increase a duration for which a user can normally use the device.

In some optional embodiments, after the SA NR standard corresponding to 5G is disabled, the SA switch may be recovered if the user performs the following operations: unplugging the USIM, turning on the airplane mode, powering on, switching the USIM, turning off or on the 5G switch, and changing the reject cause value. For example, if the user fails to register with the 5G network through USIM1 and consequently the SA is disabled, the user may manually switch the USIM to switch the current card from USIM1 to USIM2, to make an attempt about whether registration can succeed through USIM2. In this way, even if the 5G NR standard is disabled, the user can still retry registration with the 5G network through a manual operation, to provide a variety of recovery paths.

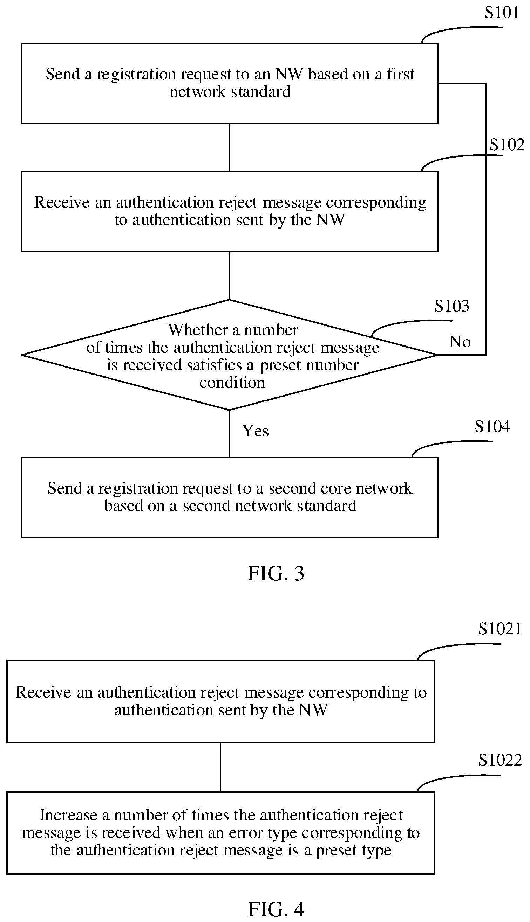

An exemplary procedure of a communication method according to an embodiment of this application is described below with reference to FIG. 3. A communication method according to an embodiment of this application is applied to a UE. A USIM is embedded in the UE, and the UE may include an electronic device 100 of a type such as a smartphone, a desktop computer, a tablet computer, a notebook computer, a smart speaker, a digital assistant, an augmented reality (augmented reality, AR) device/virtual reality (virtual reality, VR) device, or a smart wearable device. Optionally, an operating system running on the electronic device 100 may include, but is not limited to, an Android system, an IOS system, linux, windows, and the like.

FIG. 3 is a schematic flowchart of a communication method according to an embodiment of this application. According to some embodiments, the method may be performed by a UE. As shown in FIG. 3, the method provided in this embodiment of this application includes:
S101: Send a registration request to an NW based on a first network standard.

It may be understood that the first network standard may be the SA NR standard corresponding to the 5G network. Specifically, when the UE turns on the 5G switch, the UE may send the registration request to the NW to access the NW through NR under the SA NR standard.

It may be understood that the registration request is used for instructing the NW to authenticate the user equipment.

According to some embodiments, the registration request may include a 5G identifier and a terminal identity, so that the NW selects an authentication method according to the 5G identifier and the terminal identity.

The NW may determine that the authentication succeeds or the authentication fails based on the corresponding authentication method, and send an authentication reply message to the UE when determining that the authentication succeeds, or send an authentication reject message to the UE when the authentication fails.

It may be understood that the first network standard may alternatively be another network standard, for example, a network standard corresponding to a 4G network. This is not limited in this application.

S102: Receive an authentication reject message corresponding to authentication sent by the NW.

It may be understood that if the UE receives an authentication reply message sent by the NW, the UE registers successfully; and if the UE receives an authentication reject message, it indicates that the authentication fails during registration.

S103: Determine whether a number of times the authentication reject message is received satisfies a preset number condition. If yes, step S104 is performed. If not, step S101 is performed.

In step S103, if the number of times the authentication reject message is received does not satisfy the preset number condition, step S101 may be repeated until the number of times the authentication reject message is received satisfies the preset number condition. Optionally, if the authentication reply message corresponding to the authentication sent by the NW is received after step S101 is performed, steps S102 and S103 are not performed.

According to some embodiments, the preset number condition may be that the number reaches 2. The preset number condition is not limited in this application. In some other optional implementations, the preset number condition may alternatively be that the number reaches another value.

In an example, the error type corresponding to the authentication reject message may be limited to one of a plurality of preset types. Step S102 may include a procedure of determining to receive an authentication reject message. An exemplary procedure of determining an authentication reject message in step S102 is further described below based on FIG. 4. As shown in FIG. 4, an exemplary procedure of step S102 may include:
S1021: Receive an authentication reject message corresponding to authentication sent by the NW.

It may be understood that if the UE receives an authentication reject message, it indicates that the authentication fails during registration. Different authentication failure causes correspond to different error codes, the authentication reject message carries an error code, and an error type corresponding to the authentication reject message may be determined based on the error code.

S1022: Increase a number of times the authentication reject message is received when an error type corresponding to the authentication reject message is a preset type.

According to some embodiments, each preset type may correspond to one error code, and the error codes may include #20, #21, #26, and #70. A type corresponding to #20 may be MAC code failure (MAC code failure). A type corresponding to #21 may be Non-5G authentication unacceptable (Non-5G authentification unacceptable). A type corresponding to #26 may be ngKSI already in use (ngKSI already in use). A type corresponding to #70 may be synchronization failure (SQN failure) of a terminal and an NW.

For example, when a MAC code is invalid, the error code is #20. According to some embodiments, the error may be caused by a data loading exception after dual-card switching, or may be caused by a temporary network failure. For example, when the USIM is an old card, that is, not a MicroSIM card, some parameters related to 5G authentication are missing, and the error code is #21. For example, when a NAS key set identifier (NAS key set identifier, ngKSI) parameter in the UE is already in use, the error code is #26. According to some embodiments, the error may be caused by damage to a pin of the USIM in the UE.

In step S1022, whether the authentication reject message is of a preset type may be determined based on the error code carried in the authentication reject message. For example, if the authentication reject message carries the error code #21, it is determined that the authentication reject message is of a preset type.

It may be understood that when an error of any one of the foregoing preset types occurs, the NW sends an authentication reject message to the UE, and the authentication reject message carries error code information.

It may be understood that, if the authentication reject message is of a preset type, a counter configured to collect statistics on the number of times the authentication reject message is received may accumulate the number. For example, if the authentication reject message is received for the first time and it is determined that the error type corresponding to the authentication reject message is of a preset type, the number is accumulated to 1. If the authentication reject message corresponding to the preset type is received again, the number is increased by 1, that is, the number is accumulated to 2, and so on.

S104: Send a registration request to a core network based on a second network standard.

The core network may be a second core network corresponding to the second network standard.

It may be understood that, corresponding to that the number of times the authentication reject message is received satisfies the preset number condition, the first network standard of the UE may be disabled, so that the UE sends, based on the second network standard, the registration request to the second core network corresponding to the second network standard. It may be understood that the second network standard in this embodiment of this application is lower than the first network standard. For example, when the first network standard is a network standard corresponding to 5G, the second network standard may be a network standard corresponding to 4G, or may be a network standard corresponding to 3G, 2G, or the like. When the first network standard is a network standard corresponding to 4G, the second network standard may be a network standard corresponding to 3G, or may be a network standard corresponding to 2G. This is not limited in this application.

Optionally, the first network standard is a network standard corresponding to 5G, that is, disabling the first network standard represents prohibiting the UE from performing network search based on the standard corresponding to 5G, which is equivalent to prohibiting the UE from registering with a 5G network. It may be understood that network search is performed based on a standard other than the first network standard, that is, registration with another wireless network other than the 5G network is automatically performed. For example, in an embodiment in which the second network standard is 4G LTE, the UE may register with a 4G network, so that the user can normally use a 4G network access function of the UE.

The first network standard may be disabled for a limited period of time.

According to some embodiments, a duration for disabling the first network standard may be determined according to a time of disabling. Optionally, a disabling duration is 12 minutes when the SA NR standard is disabled for the first time; a disabling duration is 2 hours when the SA NR standard is disabled for the second time; a disabling duration is 8 hours when the SA NR standard is disabled for the third time; a disabling duration is 24 hours when the SA NR standard is disabled for the fourth time. A specific duration of each time of disabling is not limited in this embodiment of this application.

According to some embodiments, a disabling duration may increase as a time of disabling increases. For example, in the foregoing embodiment, a disabling duration for disabling the SA NR standard for the fifth time may be longer than 24 hours.

According to some other embodiments, a disabling duration may alternatively be a cyclic array. For example, in the foregoing embodiment, a disabling duration for disabling the SA NR standard for the fifth time goes back to 12 minutes, and a disabling duration for disabling the SA NR standard for the sixth time goes back to 2 hours. Such a cycle is repeated.

It may be understood that after the disabling duration of each time of disabling ends, the UE may initiate registration again based on the first network standard, that is, restart execution from step S101. If step S103 is performed again, a next time of disabling is entered, and the next time of disabling is performed according to a duration corresponding to the next time of disabling.

The user may manually release the disabling by performing some preset operations. In some optional embodiments, after the SA NR standard corresponding to 5G is disabled, the SA switch may be recovered if the user performs the following operations including: unplugging the USIM, turning on the airplane mode, powering on, switching the USIM, turning off or on the 5G switch, and changing the reject cause value. For example, if the user fails to register with the 5G network through USIM1 and consequently the SA is disabled, the user may manually switch the USIM to switch the current card from USIM1 to USIM2, to recover the SA switch and make an attempt about whether registration can succeed through USIM2. In another example, if the user turns on or off the airplane mode, the SA switch may also be recovered. In this way, the user can retry registration with the 5G network through a manual operation at any time.

It may be understood that the reject cause value is an error code. In other words, if an authentication reject message carrying a new error code is received, indicating that the reject cause value changes, the SA switch is recovered. In this embodiment, after step S104, the method further includes: receiving a second authentication reject message sent by the second core network, and determining that the received second authentication reject message satisfies a second network switching condition, where the second network switching condition includes that error type information included in the received second authentication reject message is different from the error type information included in the received first authentication reject message; and enabling the first network standard, and sending a registration request to the first core network based on the first network standard. A change in an error cause may indicate that a network environment or a device status changes. Therefore, in this case, the SA switch may be recovered to retry high-standard network search and registration, for example, retry the registration with the 5G network.

According to some embodiments, if the user equipment receives an authentication reject message after sending the registration request to the core network based on the second network standard, and detects that an error code carried in the authentication reject message is different from an error code received last time, the SA switch may be recovered, and the registration request is sent to the core network based on the first network standard again.

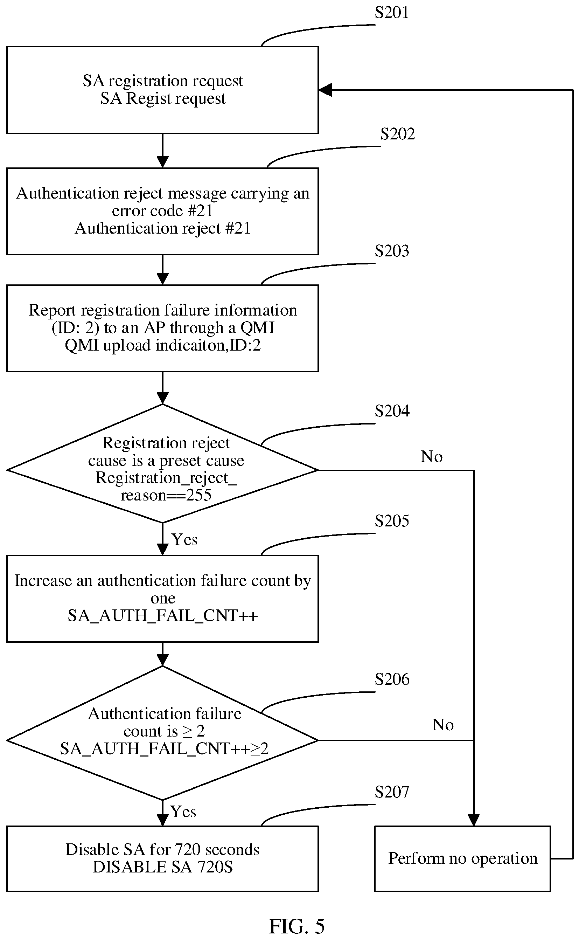

The method of this application is further described below based on FIG. 5. As shown in FIG. 5, the method includes:
S201: Send an SA registration request.

In step S201, a UE may send a registration request to a 5G NW based on an SA NR standard.

S202: Receive an authentication reject message carrying an error code #21.

In step S202, the UE receives the authentication reject message carrying the error code #21 and fed back by the 5G NW.

It may be understood that #21 corresponds to an error cause: Non-5G authentication unacceptable (Non-5G authentification unacceptable).

S203: Report registration failure information (ID: 2) to an AP through a QMI.

According to some embodiments, the registration failure information includes an error code and a card identifier, for example, #21 and an ID: 2. #21 may be obtained by parsing the authentication reject message, #21 indicates that the error type is an error type corresponding to the error code #21, and ID: 2 indicates that a USIM whose registration fails is USIM2, that is, the card whose registration fails is a second card of two cards.

It may be understood that the registration failure information may be reported to a wireless access (AP) module through a QMI channel, so that a corresponding module in the AP performs subsequent steps S204 to S207 according to the registration failure information.

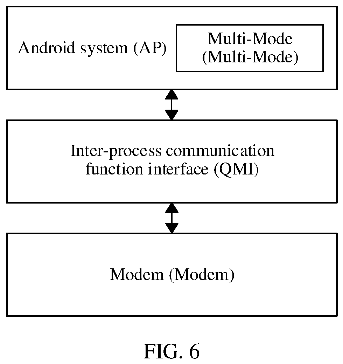

According to some embodiments, referring to FIG. 6, the UE includes a modem (Modem) and an AP, and an inter-process communication function interface (QMI) is a data transmission channel connecting the AP and the Modem. It may be understood that the Modem may communicate with the NR and the NW, and the QMI may transfer information about the Modem to the AP. For example, after receiving the authentication reject message sent by the NW, the Modem may parse the authentication reject message, and transmit the registration failure information obtained after the parsing to the AP at the upper layer through the QMI. Specifically, the registration failure information may be uploaded to a multi-mode (Multi-mode) module in a Non-Access Stratum (Non-Access Stratum, NAS) layer in the AP. It may be understood that the NAS layer is used for network search, authentication, and registration initiation.

S204: Determine whether a registration reject cause is a preset cause. If yes, step S205 is performed. Otherwise, no disabling operation is performed.

It may be understood that each preset cause may correspond to one error code, and a reject cause may be determined based on an error code. For example, error codes may include #20, #21, #26, and #70. A type corresponding to #20 may be MAC code failure (MAC code failure). A type corresponding to #21 may be Non-5G authentication unacceptable (Non-5G authentification unacceptable). A type corresponding to #26 may be ngKSI already in use (ngKSI already in use). A type corresponding to #71 may be synchronization failure (SQN failure) of a terminal and an NW. For example, if the registration failure message includes the error code #21, it is determined that the registration reject cause is a preset cause.

S205: Increase an authentication failure count by one.

It may be understood that the authentication failure count is 0 in an initial state, and each time step S205 is triggered, the authentication failure count is increased by one.

S206: Determine whether the authentication failure count is ≥ 2. If yes, step S207 is performed. Otherwise, no disabling operation is performed, and step S201 is performed.

According to some embodiments, if the authentication failure count is 0 or 1, no disabling operation is performed, and step S201 is performed.

It should be noted that the threshold in step S206 is not limited in this application. In another optional embodiment, the threshold may alternatively be a value other than 2.

S207: Disable SA for 720 seconds.

It should be noted that the disabling SA for 720 seconds is merely an example herein. Different disabling durations may be implemented according to different times of disabling. For example, the disabling duration may increase according to a time of disabling. In another example, the time of disabling may be a cyclic array. For example, starting from the first time of disabling, the disabling durations are respectively: 720s, 7200s, 28800s, 86400s, 720s, 7200s, and so on.

Through a communication method of this application, when an authentication parameter corresponding to the first network standard in the user equipment has an exception, registration with a wireless network based on another standard still succeeds, so that the user can normally use functions such as data and voice, thereby ensuring normal use of the device. In addition, in the solution of this application, the disabling duration is increased as the number of times of disabling increases, which can avoid a case that a function of the device is frequently disabled, thereby increasing a duration for which a user can normally use the device. During the disabling, the user may alternatively enable the switch of the first network standard based on a manual operation at any time, which is convenient for the user to perform manual retrying.

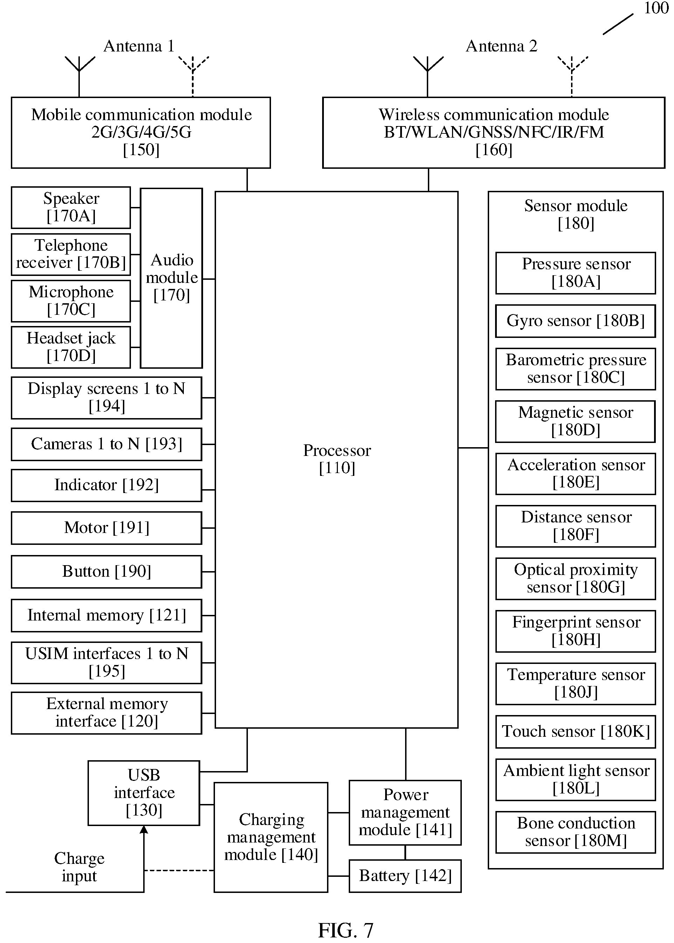

FIG. 7 is a schematic diagram of a hardware structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, and an audio module 170, a speaker 170A, a telephone receiver 170B, a microphone 170C, a headset jack 170D, a sensor module 180, a button 190, a motor 191, an indicator 192, a camera 193, a display screen 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that an example structure in this embodiment of the present invention does not constitute a specific limitation on the electronic device 100. In some other embodiments of this application, the electronic device 100 may include more or fewer components than those shown in the figure, or some components may be combined, or some components may be split, or a different component deployment may be used. The components in the figure may be implemented by hardware, software or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

A memory may be further arranged in the processor 110, and is configured to store instructions and data corresponding to a communication method provided in the embodiments of this application. In some embodiments, the memory in the processor 110 is a cache memory. The memory may store an instruction or data that is just used or used cyclically by the processor 110. If the processor 110 needs to use the instruction or the data again, the processor may directly invoke the instruction or the data from the memory, to avoid repeated access, and reduce a waiting time of the processor 110, thereby improving system efficiency.

In some embodiments, the processor 110 of the electronic device 100 is configured to perform, by invoking the program instructions stored in the memory, the communication method mentioned in this application according to the obtained program instructions, for example, sending a registration request to an NW based on a first network standard, where the first registration request is used for instructing the NW to authenticate user equipment; receiving an authentication reject message corresponding to authentication sent by the NW, and repeating a step: sending the registration request to the NW based on the first network standard until a number of times an authentication reply message corresponding to authentication sent by the NW is received or an authentication reject message is received has reached a preset number; and disabling the first network standard in response to that a number of times the authentication reject message is received has reached a preset number.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be multiplexed to improve antenna utilization. For example, the antenna 1 may be multiplexed into a diversity antenna of a wireless local area network. In some other embodiments, the antenna may be used in combination with a tuning switch.

The mobile communication module 150 may provide a solution to wireless communication such as 2G/3G/4G/5G applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and send the electromagnetic wave to the modem processor for demodulation. The mobile communication module 150 may further amplify a signal modulated by the modem processor, and convert the signal into an electromagnetic wave through the antenna 1 for radiation. In some embodiments, at least some functional modules of the mobile communication module 150 may be disposed in the processor 110. In some embodiments, at least some functional modules of the mobile communication module 150 and at least some modules of the processor 110 may be disposed in the same device.

The modem processor may include a modulator and a demodulator. The modulator is configured to modulate a to-be-sent low-frequency baseband signal into a medium-highfrequency signal. The demodulator is configured to demodulate a received electromagnetic wave signal into a low-frequency baseband signal. Then the demodulator transfers the low-frequency baseband signal obtained through demodulation to the baseband processor for processing. The low-frequency baseband signal is processed by the baseband processor and then transmitted to an application processor. The application processor outputs a sound signal through an audio device (not limited to the speaker 170A, the phone receiver 170B, or the like), or displays an image or a video through the display screen 194. In some embodiments, the modem processor may be an independent device. In some other embodiments, the modem processor may be independent of the processor 110, and the modem processor and the mobile communication module 150 or another functional module may be disposed in the same component.

In some embodiments, in the electronic device 100, the antenna 1 is coupled to the mobile communication module 150, and the antenna 2 is coupled to the wireless communication module 160, so that the electronic device 100 may communicate with a network and another device through a wireless communication technology.

The electronic device 100 implements a display function through the GPU, the display screen 194, the application processor, and the like. The GPU is a microprocessor for image processing, and is connected to the display screen 194 and the application processor. The GPU is configured to perform mathematical and geometric calculation, and is configured to render an image. The processor 110 may include one or more GPUs that execute a program instruction to generate or change display information.

The USIM interface 195 is configured to connect to a USIM. The USIM may be inserted into the USIM interface 195 or unplugged from the USIM interface 195, to come into contact with or be separated from the electronic device 100. The electronic device 100 may support 1 or N USIM interfaces, and N is a positive integer greater than 1. The USIM interface 195 may support Nano USIM, Micro USIM, USIM, and the like. A plurality of cards may be simultaneously inserted into the same USIM interface 195. The plurality of cards may be of the same type or different types. The USIM interface 195 may also be compatible with different types of USIMs. The USIM interface 195 may also be compatible with an external storage card. The electronic device 100 interacts with the network by the USIM to implement functions such as call and data communication. In some embodiments, the electronic device 100 uses an eSIM, that is, an embedded USIM. The USIM may be embedded in the electronic device 100 and cannot be separated from the electronic device 100.

A software system of the electronic device 100 may use a layered architecture, an event-driven architecture, a micro core architecture, a micro service architecture, or a cloud architecture. In this embodiment of the present invention, an Android system with a layered architecture is used as an example to illustrate a software structure of the electronic device 100.

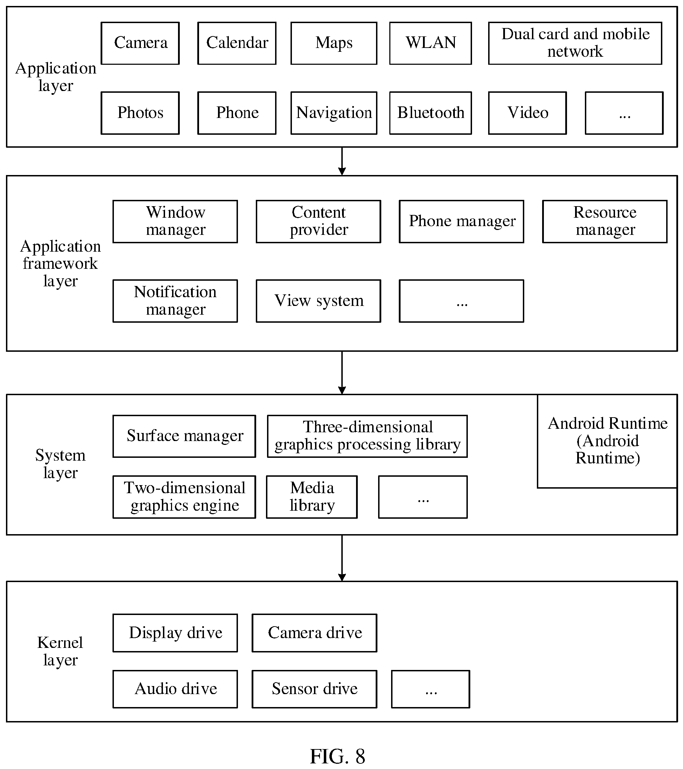

FIG. 8 is a block diagram of a software structure of an electronic device 100 according to an embodiment of the present invention.

In a layered architecture, software is divided into several layers, and each layer has a clear role and task. The layers communicate with each other through a software interface. In some embodiments, the Android system is divided into four layers that are respectively an application layer, an application framework layer, an Android runtime (Android runtime) and system library, and a kernel layer from top to bottom.

The application layer may include a series of application packages. As shown in FIG. 8, the application packages may include applications such as camera, photos, calendar, phone, maps, navigation, WLAN, Bluetooth, and dual card and mobile network. The user may perform USIM replacement, switching of a wireless network, switching of a 5G switch, and the like through the dual card and mobile network.

The application framework layer provides an application programming interface (application programming interface, API) and a programming framework for an application at the application layer. The application framework layer includes some predefined functions.

As shown in FIG. 8, the application framework layer may include a window manager, a content provider, a view system, a phone manager, a resource manager, a notification manager, and the like.

In some embodiments, the notification manager is configured to notify that the 5G function is disabled, perform message reminding, and the like. The notification manager enables an application to display notification information in the status bar that may be used to convey a message of a notification type, where the message may disappear automatically after a short stay without user interaction. The notification manager may alternatively display a notification in a form of a chart or a scroll bar text in a status bar at the top of the system, for example, a notification of an application run in the background, or may display a notification in a form of a dialog window on the screen. For example, text information is prompted on a status bar, a prompt tone is made, the mobile device vibrates, or an indicator light flashes.

The Android Runtime includes a core library and a virtual machine. The Android runtime is responsible for scheduling and management of the Android system.

The system library may include a plurality of function modules, for example, a surface manager (surface manager), a media library (media libraries), a three-dimensional graphics processing library (for example, OpenGL ES), and a 2D graphics engine (for example, SGL).

The kernel layer is a layer between hardware and software. The kernel layer includes at least a display drive, a camera drive, an audio drive, and a sensor drive.

Correspondingly, an embodiment of this application provides an electronic device, including: a memory, configured to store instructions executed by one or more processors of the electronic device, and the processor, configured to execute the instructions of the foregoing communication method.

Correspondingly, an embodiment of this application provides a readable medium. The readable medium has instructions stored thereon, and when the instructions are executed on an electronic device, the electronic device is enabled to perform the foregoing communication method.

This specification provides method or procedure operation steps described in the embodiments or flowcharts. However, more or fewer operation steps may be included based on conventional or non-creative efforts. The sequence of steps enumerated in the embodiments is only one of many execution sequences, and is not a unique sequence of implementation. During actual execution, the method may be performed according to method or procedure orders shown in the embodiments or the accompanying drawings or performed in parallel (for example, in a parallel controller or multi-thread processing environment).

Embodiments disclosed in this application may be implemented in hardware, software, firmware, or a combination of these implementation methods. Embodiments of this application may be implemented as computer program or program code executed on a programmable system. The programmable system includes at least one processor, a storage system (including a volatile memory and a non-volatile memory, and/or a storage element), at least one input device, and at least one output device.

The program code may be used for inputting instructions, to execute functions described in this application and generate output information. The output information may be used in one or more output devices in a known manner. For a purpose of this application, a processing system includes any system having a processor such as a digital signal processor (DSP), a microcontroller, an application specific integrated circuit (ASIC), a microprocessor, or the like.

The program code may be implemented in a high-level programming language or an object-oriented programming language, to communicate with the processing system. When required, the program code may alternatively be implemented through an assembly language or a machine language. In fact, the mechanisms described in this application are not limited to a scope of any specific programming language. In any case, the language may be a compilation language or an interpretation language.

In some cases, the disclosed embodiments may be implemented in hardware, firmware, software, or any combination thereof. The disclosed embodiments may also be implemented as instructions carried or stored thereon by one or more temporary or non-transitory machine-readable (for example, computer-readable) storage media, which may be read and executed by one or more processors. For example, the instructions may be distributed through a network or through another computer-readable medium. Therefore, the machine-readable medium may include any mechanism used for storing or transmitting information in a machine (for example, computer) readable form, including but not limited to a floppy disk, an optical disc, an optical disk, a read-only memory (CD-ROMs), a magnetic optical disc, a read-only memory (ROM), a random access memory (RAM), an erasable programmable read-only memory (EPROM), an electrically erasable programmable read-only memory (EEPROM), a magnetic card or an optical card, a flash memory, or a tangible machine-readable memory used for transmitting information (such as a carrier, an infrared signal, and a digital signal) over the Internet to transmit propagation signals in the form of electricity, light, sound, or other forms. Therefore, the machine-readable medium includes any type of machine-readable medium suitable for storing or transmitting electronic instructions or information in the machine-readable form (for example, the computer).

As used herein, the term "module" may refer to, a part of, or include: a memory (shared, dedicated, or grouped) for running one or more pieces of software or firmware programs, an application-specific integrated circuit (ASIC), an electronic circuit and/or a processor (shared, dedicated, or grouped), a combinational logic circuit, and/or another suitable component that provides the described function.

In the accompanying drawings, some structural or methodological features may be shown in a particular arrangement and/or order. However, it should be understood that such a specific arrangement and/or order is not necessary. However, in some embodiments, the features may be described in a manner and/or order different from that shown in the illustrative figures. In addition, inclusion of structural or methodological features in a particular accompanying drawing does not mean that all embodiments need to include such features. In some embodiments, the features may not be included, or the features may be combined with other features.

The embodiments of this application are described in detail above with reference to the accompanying drawings. However, use of the technical solutions of this application is not limited to the various applications mentioned in the embodiments of this patent, and various structures and modifications can be easily implemented by referring to the technical solutions of this application, to achieve the various beneficial effects mentioned in the specification. Within the knowledge of those skilled in the art, various changes made on the premise of not departing from the purpose of this application shall all fall within the coverage scope of the patent of this application.

## Claims

1. A communication method, applied to user equipment, and comprising:
sending a registration request to a first core network of a first network standard, wherein the registration request is used for instructing the first core network to authenticate the user equipment;
receiving a first authentication reject message sent by the first core network, and determining that the received first authentication reject message satisfies a first network switching condition, wherein the first network switching condition comprises that a number of times the first authentication reject message comprising a first type of error type information is received is greater than a number threshold; and
disabling the first network standard, and sending a registration request to a second core network based on a second network standard, wherein the first network standard is higher than the second network standard, and the first network standard is a 5G network standard.

2. The method according to claim 1, wherein the disabling the first network standard, and sending a registration request to a second core network based on a second network standard comprises:
determining a disabling duration for disabling the first network standard;
disabling the first network standard, and sending the registration request to the second core network based on the second network standard; and
enabling the first network standard in response to that the disabling of the first network standard has reached the disabling duration, and sending a registration request to the first core network based on the first network standard.

3. The method according to claim 2, wherein the determining a disabling duration for disabling the first network standard comprises:
determining a number of times disabling of the first network standard has been performed, wherein each time of disabling corresponds to a preset duration; and
determining a preset duration corresponding to the number of times disabling of the first network standard has been performed as the disabling duration.

4. The method according to claim 1, wherein the method further comprises:
enabling the first network standard in response to a network recovery operation performed by a user based on the user equipment, and sending a registration request to the first core network based on the first network standard.

5. The method according to claim 1, wherein a manner of determining that the first authentication reject message comprises the first type of error type information comprises:
determining, when the first authentication reject message comprises a preset error identifier, that the first authentication reject message comprises the first type of error type information.

6. The method according to claim 5, wherein the preset error identifier comprises at least one of #20, #21, #26, and #70;
an error cause corresponding to #20 is MAC code failure;
an error cause corresponding to #21 is Non-5G authentication unacceptable;
an error cause corresponding to #26 is 5G authentication parameter already in use;
an error cause corresponding to #70 is synchronization failure of the user equipment and the first core network.

7. The method according to claim 4, wherein the network recovery operation comprises at least one of turning on or off an airplane mode, unplugging or replacing a subscriber identity module card, or turning on or off a 5G switch.

8. The method according to claim 1, wherein after the disabling the first network standard, and sending a registration request to a second core network based on a second network standard, the method further comprises:
receiving a second authentication reject message sent by the second core network, and determining that the received second authentication reject message satisfies a second network switching condition, wherein the second network switching condition comprises that error type information comprised in the received second authentication reject message is different from the error type information comprised in the received first authentication reject message; and
enabling the first network standard, and sending a registration request to the first core network based on the first network standard.

9. The method according to any one of claims 1 to 8, wherein the second network standard is a 4G network standard.

10. An electronic device, comprising:
a memory, configured to store instructions executed by one or more processors of the electronic device, and
the processor, configured to execute the instructions of the communication method according to any one of claims 1 to 9.

11. A readable medium, wherein the readable medium has instructions stored thereon, and when the instructions are executed on an electronic device, the electronic device is enabled to perform the communication method according to any one of claims 1 to 9.
